(19) Europäisches Patentamt
European Patent Office
Office européen des brevets

(11) **EP 2 456 140 A1**

## (12) EUROPEAN PATENT APPLICATION

(43) Date of publication:
    **23.05.2012 Bulletin 2012/21**

(51) Int Cl.:
    **H04L 12/56** (2006.01)

(21) Application number: **11189247.7**

(22) Date of filing: **15.11.2011**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**

(30) Priority: **17.11.2010 EP 10306267**

(71) Applicant: **Thomson Licensing
    92130 Issy-les-Moulineaux (FR)**

(72) Inventors:
    • **Bichot, Guillaume**
      **35576 Cesson-Sevigne (FR)**
    • **Gouache, Stephane**
      **35576 Cesson-Sevigne (FR)**

(74) Representative: **Huchet, Anne**
    **Technicolor
    1-5 rue Jeanne d'Arc
    92130 Issy-les-Moulineaux (FR)**

(54) **Method and device for determining communication path(s) between items of communication equipment with multiple communication interfaces**

(57)    A method dedicated to the determination of communication path(s) for packets of a communication session using at least two communication paths established between two items of communication equipment (E1, E2), one of these items of equipment (E1) having at least two communication interfaces ($I_{11}$, $I_{12}$) having different communication addresses, and the other (E2) having at least one communication interface ($I_{21}$) having a communication address. This method comprises a step (a) consisting in selecting one of the communication interfaces ($I_{11}$) of a first item of communication (E1) according to use priority levels that are associated with them, and a step (b) consisting in selecting, in order to transmit packets of the communication session, at least one of the communication paths existing between one of the communication interfaces ($I_{21}$) of the second item of communication equipment (E2) and the communication interface ($I_{11}$) selected for the first item of communication equipment (E1), according to a maximum authorized bandwidth in reception for this last interface ($I_{11}$) and packet transmission time on existing communication paths.

FIG. 1

## Description

Technical domain of the invention

The invention relates to items of communication equipment able to participate in multipath type communication sessions due to the fact that they have one or several communication interfaces having specific and different addresses for communication to connect to different access networks.

It is understood here by "communication path" a path connecting two items of communication equipment via two communication interfaces (one per item of equipment) each defined by a communication address (for example an IP address). A communication path is thus identified by the pair of communication addresses of two communication interfaces.

Moreover, it is understood here by "item of communication equipment" any equipment type comprising at least one communication interface, and preferably several that are wired or wireless and capable of exchanging packets of data with another item of communication equipment possibly of a different type. Consequently, it may involve a fixed or mobile telephone, possibly of "smart phone" type, a fixed or portable computer, a Personal Digital Assistant (PDA including a "pocket PC"), a content receiver (such as for example a decoder, a residential gateway or a Set-Top Box (STB), or an item of network equipment (such as for example a content server).

Prior art

Persons skilled in the art know that, when an item of (communication) equipment communicates in a multipath mode with another item of equipment, it must implement a packet transmission strategy in order to select one or several communication paths according to the requirements of the application concerned (and particularly of the type of data that it uses or produces) and the characteristics and respective status of communication paths that exist between it and this other item of equipment. These characteristics and status must be compatible with the current status of different access networks that are borrowed by the communication paths, and are updated regularly due to measurements.

As a non-restrictive example, when the communication session relates to a video broadcast application, each communication path can be characterized by parameters such as bandwidth or "binary debit" (in fact they concern equivalent appellations having a same unit, namely a number of bits per unit of time), packet jitter, the transmission time of packets (or "delay"). These parameters can be measured (or estimated) via diverse techniques called end-to-end techniques which are not generally trivial due to the fact that they must be non-intrusive (that is to say they must not cause interferences). For example when the transport protocol is of TCP (Transmission Control Protocol) or SCTP (Stream Control Transmission Protocol - defined notably in the regulations RFC 4960 and 5061 of the IETF) type, a Westwood type algorithm can be used to maximise the use efficiency of the bandwidth by continually measuring the available bandwidth on a communication path via duplicated acknowledgements of packets transmitted and at the packet arrival time intervals.

However, even if the packet transmission strategy uses quite precise parameter values, it does not take into account some items of local information, known to items of equipment (intermediary points or end points) participating in a communication session, that could direct the choice of a communication path. Among such items of local information, can notably be cited the use cost of an interface linked to the use cost of its access network, the possibility of controlling the Quality of Service (QoS) on a communication interface, and the energy consumption for a given bandwidth (it can vary from one communication interface to another according to the place considered and/or the time).

Summary of the invention

The purpose of the invention is thus to improve the situation, and more specifically to enable a packet transmission strategy taking into account certain items of local information known to items of equipment (intermediary points or end points) that participate in communication sessions.

For this purpose, the invention proposes notably a first method, dedicated to the transmission of information between two items of communication equipment in the scope of a communication session using at least two communication paths, one of these items of equipment having at least two communication interfaces having different communication addresses, and the other having at least one communication interface having a communication address, and comprising:

- a step (i) consisting in generating in the at least one item of communication equipment a control message that contains each communication address of each of the communication interfaces associated with first and second items of information representative respectively of a level of use priority and a maximum authorized bandwidth in reception ($K_{ji}$ - the index i designates an interface and the index j designates an item of equipment), and

- a step (ii) consisting in transmitting the control message to the other item of communication equipment in order to determine at least one communication path to transmit packets of the communication session between one of these communication interfaces and one of the communication interfaces of the item of communication equipment that transmitted the control message.

By "maximum authorized bandwidth" is understood here the maximum bandwidth that an item of equipment accepts to receive on a given interface.

For example, each control message can be compliant with the SCTP (Stream Control Transmission Protocol) transport protocol.

The invention also proposes a second method, dedicated to the determination of communication paths for packets of a communication session using at least two communication paths established between two items of communication equipment, one of these items of equipment having at least two communication interfaces having different communication addresses, and the other having at least one communication interface having a communication address and comprising:

- a step (a) consisting in selecting one of the communication interfaces of a first item of communication equipment according to use priority levels that are associated with them, and
- a step (b) consisting in selecting, to transmit packets of the communication session, at least one of the communication paths existing between one of the communication interfaces of the second item of communication equipment and the communication interface selected for the first item of communication equipment, according to a maximum authorised bandwidth in reception ($K_{ji}$) for this last interface and packet transmission time on existing communication paths.

The second method according to the invention can comprise other characteristics that can be taken individually or in combination, and particularly:

- at step (a) the selection can be carried out from among the communication interfaces of the first item of communication equipment that are associated with a maximum authorized bandwidth in reception ($K_{ji}$) that is greater than the bandwidth of packets to be transmitted of the communication session,
- when the bandwidth that can be used on the selected communication path is strictly less than the maximum authorized bandwidth in reception for the selected communication interface of the first item of communication equipment, at least one other of the communication paths existing between a communication interface of the second item of communication and the selected communication interface of the first item of communication equipment can be selected, according to the time required to transmit packets on the existing communication paths, so that the packets of the communication session are transmitted is a distributed manner on the selected communication path,
- Each transmission time $R_m$ of packets on an existing communication path can, purely as an example, be determined according to the following equation: $R_m$

$= (O_m + D) / \min(B_m, k_m)$, where $O_m$ is the number of packets that are in transmission on the existing communication path considered, D is the number of packets that must be transmitted, $B_m$ is an estimation of the current transmission capacity on the existing communication path considered, and $k_m$ is a maximum bandwidth authorized in reception in the selected communication interface of the first item of communication equipment for the existing communication path considered;

- in a variant, each transmission time $R_m$ of packets on an existing communication path can, purely as an example, be determined according to the following equation: $R_m = \text{minRTT}_m/2 + (O_m + S_m + D) / \min(B_m, k_m)$, where $\text{minRTT}_m$ is the smallest go/return time observed on the existing communication path considered, $O_m$ is the number of packets that are in transmission on the existing communication path considered, $S_m$ is the number of packets awaiting transmission on the existing communication path considered, D is the number of packets that must be transmitted, $B_m$ is an estimate of the current transmission capacity on the existing communication path considered, and $k_m$ is a maximum authorized bandwidth in reception in the selected communication interface of the first item of communication equipment for the existing communication path considered,

- each parameter $k_m$ can, as a non-restrictive example, be provided by the following equiprobable formula: $k_m = K_{ji} / N_{ji}$, where $N_{ji}$ is the number of existing communication paths arriving in a selected communication interface of the first item of communication equipment,

- when each item of equipment implements a packet flow management algorithm at the level of each of its communication interfaces, it is possible to select at step (b), in the second item of communication equipment, at least one of the communication paths existing between one of its communication interfaces, capable, at the instant considered, of offering a bandwidth that can be used in transmission greater than the bandwidth of packets to be transmitted of the communication session, and the selected communication interface of the first item of communication equipment,

- as a variant, when each item of communication equipment implements a packet flow management algorithm at the level of each of its communication interfaces, it is possible to select at step (b), in the second item of communication equipment, at least one of the communication paths existing between one of its communication interfaces, capable, at the instant considered, on one hand of offering a bandwidth that can be used in transmission equal the bandwidth of packets to be transmitted of the communication session minus a surplus bandwidth, and on the other hand to transmit the packets corresponding to this surplus bandwidth in a delay that is less than a chosen threshold, and the selected communication interface of the first item of communication equipment.

The invention also proposes a first device dedicated to the generation of control messages for a communication session using at least two communication paths established between two items of communication equipment, one of these items of equipment having at least two communication interfaces having different communication addresses, and the other having at least one communication interface having a communication address. This first device is characterized by the fact that is adapted to generate for one of the item of communication equipment a control message that contains each communication address of each of the communication interfaces associated with first and second items of information respectively representative of a use priority level and a maximum authorized bandwidth in reception.

Moreover, this first device can be adapted to generate control messages in accordance with the SCTP transport protocol.

The invention also proposes a second device, dedicated to the determination of communication path(s) for packets of a communication session using at least two communication paths established between two items of communication equipment, one of these items of equipment having at least two communication interfaces having different communication addresses, and the other having at least one communication interface having a communication address.

This second device is characterized by the fact that it comprises:

- first means for selecting adapted for selecting one of the communication interfaces of a first item of communication equipment according to use priority levels that are associated with them, and
- second means for selecting adpated for selecting, with a view to the transmission of packets of the communication session, at least one of the communication paths existing between one of the communication interfaces of the second item of communication equipment and the communication interface selected for the first item of communication equipment, according to a maximum authorised bandwidth in reception ($K_{j'i}$) for this last interface and packet transmission time on existing communication paths.

The invention also proposes an item of communication equipment comprising, on one hand, at least one communication interface having a communication address, and, on the other hand, a device for generation of messages of the type of that presented previously and/or a device for determination of communication path(s) of the type presented previously.

Brief description of the drawings

Other characteristics and advantages of the invention will appear upon examination of the detailed description hereafter, and of the figure in the appendix in which the single figure diagrammatically shows two items of communication equipment each equipped with a device for generation of control messages according to the invention, a device for determination of communication path(s) according to the invention and specific communication interfaces to connect respectively to different access networks paired together.

The annexed drawing can be used not only to complete the invention, but also to contribute to its definition, if necessary.

Detailed description

The purpose of the invention is to enable account to be taken of certain items of local information, known to items of communication equipment (intermediary points or end points) Ej that participate in communication sessions in multipath mode, during the selection of communication paths.

Hereafter, it is considered as a non-restrictive example that the items of communication equipment Ej are mobile telephones, residential gateways or content servers. But, the invention is not limited to these types of communication equipment. It relates to in fact any equipment type Ej comprising at least one communication interface $I_{ji}$, and preferably several, wired or wireless and capable of exchanging packets of data with another item of communication equipment Ej' ($j' \neq j$), possibly of a different type. Consequently, it could also involve, for example, a fixed telephone, a fixed or portable computer, a Personal Digital Assistant (or PDA, including a pocket PC), a content receiver (such as for example a decoder, a residential gateway or a Set-Top Box (STB), or any other item of network equipment implicated in the transmission of packets of data.

A non-restrictive example of multipath pairing between two items of (communication) equipment Ej (j = 1 or 2) is diagrammatically shown in the figure.

The first item of equipment E1 (j = 1) comprises, in this non-restrictive example, two communication interfaces $I_{1i}$. The first communication interface $I_{11}$ (i = 1) is able to connect to a first access network R1, for example of WiFi type. The second communication interface $I_{12}$ (i = 2) is able to connect to a second access network R2, for example of 3G+ type, and paired to the first access network R1 and to a third access network R3, for example of WiFi type. This item of equipment E1 is for example a mobile telephone.

The second item of equipment E2 (j = 2) comprises, in this non-restrictive example, three communication interfaces $I_{2i}$. The first communication interface $I_{21}$ (i = 1) is able to connect to the first access network R1. The second communication interface $I_{22}$ (i = 2) is

able to connect to the second access network R2. The third communication interface $I_{32}$ (i = 3) is able to connect to the third access network R3. This second item of equipment E2 is for example a content server (of videos for example).

It is noted that the access networks R1 to R3 can possibly be connected to each other via intermediary networks. The combination of access networks shown is in fact only one non-restrictive example among numerous others.

Moreover, in the non-restrictive example shown, a first communication path of packets $C_1$ (m = 1) can be established between the first (communication) interfaces $I_{11}$ and $I_{21}$ via the first access network R1, a second communication path of packets $C_2$ (m = 2) can be established between the first interface $I_{11}$ of the first item of equipment E1 and the second interface $I_{22}$ of the second item of equipment E2 via the first R1 and second R2 access networks, a third communication path of packets $C_3$ (m = 3) can be established between the first interface $I_{11}$ of the first item of equipment E1 and the third interface $I_{23}$ of the second item of equipment E2 via the first R1, second R2 and third R3 access networks, a fourth communication path of packets $C_4$ (m = 4) can be established between the second interface $I_{12}$ of the first item of equipment E1 and the first interface $I_{21}$ of the second item of equipment E2 via the second R2 and first R1 access networks, a fifth communication path of packets $C_5$ (m = 5) can be established between the second interface $I_{12}$ and $I_{22}$ of first E1 and second E2 items of equipment via the second access network R2, and a sixth communication path of packets $C_6$ (m = 6) can be established between the second interface $I_{12}$ of the first item of equipment E1 and the third interface $I_{23}$ of the second item of equipment E2 via the second R2 and third R3 access networks.

In order that the items of equipment Ej can know certain items of local information of items of equipment Ej' with which they want to establish or have established communication sessions, the invention proposes to implement a first method for transmission of information between items of equipment Ej.

This first method comprises two steps (i) and (ii).

A first step (i) consists in generating in the at least one item of equipment Ej a control message that contains each communication address of each of the (communication) interfaces $I_{ji}$, associated with first and second items of information that are representative respectively of a level of use priority and of a maximum authorized bandwidth in reception $K_{ji}$.

By "maximum authorized bandwidth" is understood here the maximum bandwidth that an item of equipment accepts to receive on a given interface.

The level of use priority is relative within a given item of equipment Ej. For example the smaller the value of the level the more the corresponding interface $I_{ji}$ must be used in priority. It is considered hereafter that an interface $I_{ji}$ having a use priority level of a value equal to one (1) has greater priority than an interface $I_{ji'}$ (i' ≠ i) having a use priority level of a value equal to two (2), which itself has greater priority than an interface $I_{ji''}$ (i" ≠ i') having a level of use priority of a value equal to three (3).

The maximum authorized bandwidth (or maximum bitrate) in reception $K_{ji}$ at the level of an interface $I_{ji}$ of a given item of equipment Ej can be considered as the sum of maximum authorized bandwidths in reception $k_m$ at the level of this interface $I_{ji}$ for the different communication paths $C_m$ that result in this last ($I_{ji}$), for the communication session considered (namely

$$K_{ji} = \sum_{m(j,i)} k_m).$$ For example, in the example shown $K_{11} = k_1 + k_2 + k_3 + k_4$, and $K_{12} = k_5$.

It is important to note that the level of use priority and/or the maximum authorized bandwidth in reception $K_{ji}$ at the level of an interface $I_{ji}$ of a given item of equipment Ej can possibly vary according to the day and/or time and/or place. Moreover, an item of equipment Ej can change at an instant the indication of the maximum authorized bandwidth in reception ($K_{ji}$) (and/or the indication of the average bandwidth) associated with a local interface $I_{ji}$ due to, for example, a higher estimation of upstream traffic (in the case where there is no separation between upstream and downstream traffic), or the start-up of a new application requiring a part of the downstream bandwidth to be reserved.

For example, each control message can be in accordance with the SCTP (Stream Control Transmission Protocol) transport protocol. But, any other transport protocol able to support "multihoming", and thus multipaths, can be used. For example, INIT and ASCONF type messages of the SCTP protocol can be modified in order to add local information to them (use priority level and maximum authorized bandwidth in reception $K_{ji}$) relative to each interface $I_{ji}$. Thus, in the case of IPv4 type communication addresses, the value of the "length" field can be changed to pass from 8 bits to 12 bits, then to add to the field dedicated to the definition of an IPv4 address (32 bits) a first field dedicated to the definition of use priority level (4 bits) and a second field dedicated to the definition of $K_{ji}$ (28 bits). In the case of IPv6 type communication addresses, the value of the "length" field (equal to 20 bits) can be conserved to add to the field dedicated to the definition of an IPv6 address (128 bits) a first field dedicated to the definition of use priority level (4 bits) and a second field dedicated to the definition of $K_{ji}$ (28 bits).

It will be noted that this first step (i) can be implemented by means of first devices (for generation of control messages) $D1_j$ that are respectively associated with the items of equipment Ej.

It is understood here by "associated" both the fact of being an integral part of an item of equipment Ej (as shown) and the fact of being paired directly or indirectly with an item of equipment Ej. Consequently, a first device (for generation of control messages) $D1_j$ can be implemented in the form of software modules, or electronic circuits, or a combination of electronic circuits and software modules.

A second step (ii) of the first method consists in transmitting a control message, that was generated by a first item of equipment (for example E1), to a second item of equipment (for example E2), in order to determine at least one communication path $C_m$ to transmit packets of the communication session considered between one of these communication interfaces $I_{2i}$ and one of the communication interfaces $I_{1i}$ of the first item of equipment E1 (that transmitted the control message).

In order to be able to use the local information that is contained in the control messages described previously, the invention proposes to implement a second method dedicated to the determination of communication paths of packets of a communication session between two items of equipment Ej.

This second method comprises two steps (a) and (b).

A first step (a) consists in selecting one of the interfaces $I_{j'i}$ of a first item of equipment Ej' (for example E1 - j' = 1) according to use priority levels that are associated with these interfaces $I_{j'i}$.

For this purpose, it can be started by constituting a list in which the interfaces $I_{j'i}$ are classed according to their respective use priority levels according to a descending order.

Then for example the selection of an interface can be carried out from among the communication interfaces $I_{j'i}$ (here $I_{1i}$) of the first item of equipment E1 that are associated with a maximum authorized bandwidth in reception $K_{1i}$ (provided in a control message previously received) that is greater than the bandwidth of packets of the communication session considered, that must be transmitted via the second item of equipment E2 to the first item of equipment E1.

A second step (b) of the second method consists in selecting, in order to enable the transmission of packets of the communication session, at least one of the communication paths $C_m$ that exist between one of the communication interfaces $I_{ji}$ (here $I_{2i}$) of the second item of equipment Ej (here E2) and the communication interface $I_{j'i}$ (here $I_{1i}$) of the first item of equipment Ej' (here E1) that was selected during the first step (a). This selection is made according to the maximum bandwidth authorized in reception $K_{1i}$ for the interface selected in (a) $I_{1i}$ and the time $R_m$ required to transmit packets on the communication paths $C_m$ that exist between the first E1 and the second E2 items of equipment.

For example, during the first step (a) the first interface $I_{11}$ of the first item of equipment E1 can be selected, then during the second step (b) the second interface $I_{22}$ is selected of the second item of equipment E2 that is paired to this first interface $I_{11}$ via the second communication path $C_2$ that passes via the first R1 and the second R2 access networks, due to the fact that it is that which enables the packets of E2 to be transmitted more rapidly to E1 at the instant considered, from among the six possible communication paths $C_1$ to $C_6$.

It will be noted that, when the bandwidth $B_m$, that can be used on the selected communication path $C_m$ (for example $C_2$), is strictly less than the maximum authorized bandwidth in reception $K_{1i}$ (for example $K_{11}$) for the interface $I_{1i}$ (for example $I_{11}$), selected for the first item of equipment E1, at least one of the other communication paths $C_m$ ($m \neq 2$, for example $m$ = 1, 3 or 4) can be selected that exist between an interface $I_{2i'}$ of the second item of equipment E2 and the interface $I_{11}$ that was selected for the first item of equipment E1. This selection is made according to times $R_m$ of transmission of packets on the communication paths $C_m$ ($m \neq 2$) that exist between the interface $I_{2i'}$, just selected, and the interface $I_{11}$ (selected during the first step (a)). The packets of the communication session are then transmitted from the second item of equipment E2 to the first item of equipment E1, in a distributed manner over the communication path initially selected $C_2$ and over the communication path newly selected $C_m$ ($m \neq 2$, for example $m$ = 1).

When the SCTP protocol is used to carry out the parameter measurements, each transmission time $R_m$ of packets on an existing communication path $C_m$ can be determined by means of one or other of two equations presented hereafter as purely illustrative examples.

A first equation $[R_m = (O_m + D) / min(B_m, k_m)]$ can, for example, be used with the Westwood type SCTP algorithm (W-SCTP). In this first equation $O_m$ represents the number of packets that are currently being transmitted on the existing communication path $C_m$ considered (from E2 to E1), D represents the number of packets that must be transmitted from the second item of equipment E2 to the first item of equipment E1, $B_m$ represent the estimate of the current transmission capacity (or usable bandwidth) on the existing communication path $C_m$ considered, and $k_m$ represents the maximum authorized bandwidth in reception in the communication interface $I_{j'i}$ (that was selected during the first step (a) for the first item of equipment E1) for the existing communication path $C_m$ considered.

A second equation $[R_m = minRTT_m/2 + (O_m + S_m + D) / min(B_m, k_m)]$ can, for example, be used with the Westwood "Partial Reliability" type SCTP algorithm ((W-SCTP-PR). In this second equation $minRTT_m$ is the shortest go/return time observed on the existing communication path $C_m$ considered, $O_m$ still represents the number of packets that are in transmission on the existing communication path $C_m$ considered (from E2 to E1), $S_m$ represents the number of packets awaiting transmission on the existing communication path $C_m$ considered (from E2 to E1), D still represents the number of packets that must be transmitted from the second item of equipment E2 to the first item of equipment E1, $B_m$ still represents the estimate of the current transmission capacity (or usable bandwidth) on the existing communication path $C_m$ considered, and $k_m$ still represents the maximum authorized bandwidth in reception in the communication interface $I_{j'i}$ (that was selected during the first step (a) for the first item of equipment E1) for the existing communication path $C_m$ considered.

It will be noted that in the two equations presented above (as examples), the parameter $k_m$ is unknown. It can in a non-restrictive example be determined by means of the following equiprobable formula: $k_m = K_{j'i} / N_{j'i}$. In this (equiprobable) example $N_{j'i}$ represents the number of existing communication paths $C_m$ that arrive at the interface $I_{j'i}$ that was selected during the first step (a) for the first item of equipment Ej' (here E1). In the example shown, the number of existing communication paths $C_m$ (m = 1 à 4) that arrive at the first interface $I_{11}$ of the first item of equipment E1 is equal to four (or $N_{11}$ = 4), and consequently the parameter $k_m$ is equal to $K_{11}/4$. But, other more complex and non-equiprobable formulas can be used. Moreover, using statistical values of $k_m$ that were acquired by experience can also be considered. But, in a variant a more general formula can be used, such as for example: $K_{j'i} \le \sum_{m(j,i)} k_m$ .

It will be noted that in the second step (b), when each item of communication equipment Ej implements a packet flow management algorithm a the level of each of its communication interfaces $I_{ji}$, the selection of each communication path $C_m$ can be carried out in the second item of equipment Ej (here E2) from among the communication paths $C_m$ that exist between one of these interfaces $I_{2i}$ (that are able, at the instant considered, to offer a usable bandwidth in transmission greater than the bandwidth of packets of the communication session that must be transmitted from E2 to E1) and the interface $I_{j'i}$ (here $I_{1i}$) that was selected during the first step (a) for the first item of equipment Ej' (here E1). This solution is more particularly adapted to the case where the packets to be transmitted arrive regularly in the second item of equipment E2. In this case, the packet flow management algorithm that is implemented can be the "leaky bucket" algorithm.

An operating variant must preferably be considered when the packets to be transmitted arrive in the form of bursts in the second item of equipment E2. In this case, the packet flow management algorithm that is implemented can be the "token bucket" algorithm. Moreover, in this case, in the second step (b) each selection of the communication path $C_m$ can be implemented for the second item of equipment Ej (here E2) from among the communication paths $C_m$ that exist between one of these interfaces $I_{2i}$ (that are able, at the instant considered, on one hand, to offer a usable bandwidth in transmission that is equal to the bandwidth of packets of the communication session that must be transmitted from E2 to E1 minus a surplus bandwidth, and, on the other hand, to transmit packets that correspond to this surplus bandwidth in a delay that is less than a selected threshold) and the interface $I_{j'i}$ (here $I_{1i}$) that was selected during the first step (a) for the first item of equipment Ej' (here E1). The threshold can, for example, be selected by the application that wants to transmit packets. But, it can also be predefined.

If it is considered that the selected threshold is an acceptable maximum delay DM and that at the instant considered no packet is awaiting transmission in the second item of equipment E or is currently being transmitted between the second item of equipment E2 and the first item of equipment E1 on a given communication path $C_m$, then the maximum number of packets of a burst $burst_m$ that this communication path $C_m$ can absorb can be provided by the third equation: $burst_m = (DM - minRTT_m/2) * min(B_m,k_m)$, if it is considered that the time $R_m$ is given by the second equation presented above [$R_m = minRTT_m/2 + (O_m + S_m + D) / min(B_m,k_m)$]. Consequently, the maximum number of packets of a burst $Burst_{ji}$ that an interface $I_{ji}$ can receive at a given instant can be provided by the fourth equation:

$$\sum_{m(j,i)} burst_m = (DM - minRTT_m/2) * min(B_m,k_m).$$

This number $Burst_{ji}$ can be used to define the capacity of packets that can be associated with each token in the token bucket type packet flow management algorithm.

When high values are selected for the parameter $K_m$ for communication paths $C_m$ having a small $RTT_m$ (which corresponds to a sharing of the maximum bandwidth of an interface $I_{ji}$), this enable a maximum capacity of burst absorption to be offered. The more burst that can be absorbed, the less is the obligation to use communication paths associated with low levels of use priority.

It will be noted that the second method can be implemented by means of second devices (for determination of communication path(s)) $D2_j$ that are associated respectively with the items of equipment Ej. For example, and as shown non-restrictively, each second device $D2_j$ can comprise first means of selection MS1 responsible for implementing the first step (a) and second means of selection responsible for implementing the second step (b).

It is understood here by "associated" both the fact of being an integral part of an item of equipment Ej (as shown) and the fact of being paired directly or indirectly with an item of equipment Ej. Consequently, a second device (for generation of communication path(s)) $D2_j$ can be implemented in the form of software modules, or electronic circuits, or a combination of electronic circuits and software modules.

The invention is not limited to embodiments of the method for transmission of information, the method for determination of communication path(s), the device for generation of control messages, the device for determination packet communication path(s), and items of communication equipment, described previously, only as an example, but encompasses any variants that may be considered by those skilled in the art within the scope of the claims hereafter.

## Claims

1. Method for transmission of information between two items of communication equipment (Ej) in the scope of a communication session using at least two communication paths, one of said items of equipment (Ej) having at least two communication interfaces ($I_{ji}$) having different communication addresses, and the other (Ej') having at least one communication interface ($I_{j'i}$) having a communication address, **characterized in that** it comprises a step (i) consisting in generating in at least one of said items of communication equipment (Ej) a control message containing each communication address of each of the communication interfaces ($I_{ji}$) associated with first and second items of information respectively representative of a level of use priority and an authorized maximum bandwidth in reception ($K_{ji}$), and a step (ii) consisting in transmitting said control message to the other of said items of communication equipment (Ej') in order to determine at least one communication path to transmit packets of said communication session between one of these communication interfaces ($I_{j'i}$) and one of the communication interfaces ($I_{ji}$) of said item of communication equipment (Ej) having transmitted said control message.

2. Method according to claim 1, **characterized in that** each control message is in accordance with the SCTP transport protocol.

3. Method for determination of communication path(s) for packets of a communication session using at least two communication paths established between two items of communication equipment (Ej), one of these items of equipment (Ej') having at least two communication interfaces ($I_{j'i}$) having different communication addresses, and the other (Ej) having at least one communication interface ($I_{ji}$) having a communication address, **characterized in that** it comprises a step (a) consisting in selecting one of the communication interfaces ($I_{j'i}$) of one of said items of communication equipment (Ej') according to the use priority levels that are associated with them, and a step (b) consisting in selecting, to transmit packets of said communication session, at least one of the communication paths existing between one of the communication interfaces ($I_{ji}$) of a second of said items of communication equipment (Ej) and said communication interface ($I_{j'i}$) selected of said first item of communication equipment (Ej'), according to a maximum authorized bandwidth in reception ($K_{j'i}$) for this last interface ($I_{j'i}$) and to transmission time of packets on said existing communication paths.

4. Method according to claim 3, **characterized in that** at step (a) said selection is carried out among the communication interfaces ($I_{j'i}$) of said first item of communication equipment (Ej') that are associated with a maximum authorized bandwidth in reception ($K_{j'i}$) greater than the bandwidth of packets to be transmitted of said communication session.

5. Method according to one of claims 3 and 4, **characterized in that**, when the usable bandwidth on said selected communication path is strictly less than said authorized maximum bandwidth in reception for said selected communication interface ($I_{j'i}$) of said first item of communication equipment (Ej'), at least one of the other communication paths is selected between one of said communication interfaces ($I_{ji}$) of said second item of communication equipment (Ej) and said selected communication interface ($I_{j'i}$) of said first item of communication equipment (Ej'), according to said packet transmission time on said existing communication paths, so that the packets of said communication session are transmitted in a distributed manner over each selected communication path.

6. Method according to one of claims 3 to 5, **characterized in that** each packet transmission time on an existing communication path is determined according to the following equation: $R_m = (O_m + D) / \min(B_m, k_m)$, where $O_m$ is the number of packets that are in transmission on said existing communication path considered, D is the number of packets that must be transmitted, $B_m$ is an estimation of the current transmission capacity on said existing communication path considered, and $k_m$ is a maximum bandwidth authorized in reception in said selected communication interface ($I_{j'i}$) of said first item of communication equipment (Ej') for said existing communication path considered.

7. Method according to one of claims 3 to 5, **characterized in that** each packet transmission time on an existing communication path is determined according to the following equation: $R_m = minRTT_m/2 + (O_m + S_m + D) / \min(B_m, k_m)$, where $minRTT_m$ is the smallest go/return time observed on said existing communication path ($C_m$) considered, $O_m$ is the number of packets that are in transmission on said existing communication path considered, $S_m$ is the number of packets awaiting transmission on the existing communication path considered, D is the number of packets that must be transmitted, $B_m$ is an estimate of the current transmission capacity on said existing communication path considered, and $k_m$ is a maxi-

mum authorized bandwidth in reception in said selected communication interface ($I_{j'i}$) of said first item of communication equipment (Ej') for said existing communication path considered.

8. Method according to one of claims 6 and 7, **characterized in that** each parameter $k_m$ is provided by the following formula: $k_m = K_{j'i} / N_{j'i}$, where $N_{j'i}$ is the number of existing communication paths arriving in said selected communication interface ($I_{j'i}$) of said first item of communication equipment (Ej').

9. Method according to one of claims 3 to 8, **characterized in that** when each item of equipment (Ej) implements a packet flow management algorithm at the level of each of its communication interfaces ($I_{ji}$), there is a selection at step (b), in said second item of communication equipment (Ej), at least one of the communication paths existing between one of its communication interfaces ($I_{ji}$), capable, at the instant considered, of offering a bandwidth that can be used in transmission greater than the bandwidth of packets to be transmitted of said communication session, and said selected communication interface ($I_{j'i}$) of said first item of communication equipment (Ej').

10. Method according to one of claims 3 to 8, **characterized in that**, when each item of communication equipment (Ej) implements a packet flow management algorithm at the level of each of its communication interfaces ($I_{ji}$), there is a selection at step (b), in said second item of communication equipment (Ej), of at least one of the communication paths existing between one of its communication interfaces ($I_{ji}$), capable, at the instant considered, on one hand of offering a bandwidth that can be used in transmission equal the bandwidth of packets to be transmitted of sais communication session minus a surplus bandwidth, and on the other hand to transmit the packets corresponding to said surplus bandwidth in a delay that is less than a chosen threshold, and said selected communication interface ($I_{j'i}$) of said first item of communication equipment (Ej').

11. Device ($D1_j$) for generation of control messages for a communication session using at least two communication paths established between two items of communication equipment (Ej), one of said items of equipment (Ej) having at least two communication interfaces ($I_{ji}$) having different communication address, and the other (Ej') having at least one communication interface ($I_{j'i}$) having a communication address, **characterized in that** it is adapted to generate for one of said items of communication equipment (Ej) a control message containing each communication address of each of the communication interfaces ($I_{ji}$) associated with first and second items of information respectively representative of a use priority level and a maximum authorized bandwidth in reception ($K_{ji}$).

12. Device according to claim 11, **characterized in that** it is adapted to generate control messages in accordance with the SCTP transport protocol.

13. Device ($D2_j$) for determination of communication path(s) for packets of a communication session using at least two communication paths established between two items of communication equipment (Ej), one of these items of equipment (Ej') having at least two communication interfaces ($I_{j'i}$) having different communication addresses, and the other (Ej) having at least one communication interface ($I_{ji}$) having a communication address, **characterized in that** it comprises first means for selection (MS1) adapted for selecting one of the communication interfaces ($I_{j'i}$) of a first of said items of communication equipment (Ej') according to the use priority levels that are associated with them, and second means of selection (MS2) adapted for selecting, with a view to transmitting packets of said communication session, at least one of the communication paths existing between one of the communication interfaces ($I_{ji}$) of a second of said items of communication equipment (Ej) and said communication interface ($I_{j'i}$) selected of said first item of communication equipment (Ej'), according to a maximum authorized bandwidth in reception ($K_{j'i}$) for this last interface ($I_{j'i}$) and to transmission time of packets on said existing communication paths.

14. Item of communication equipment (Ej) comprising at least one communication interface ($I_{ji}$) having a communication address, **characterized in that** it comprises a device for generation of control messages ($D1_j$) according to one of claims 11 and 12 and/or a device for determination of communication path(s) ($D2_j$) according to claim 13.

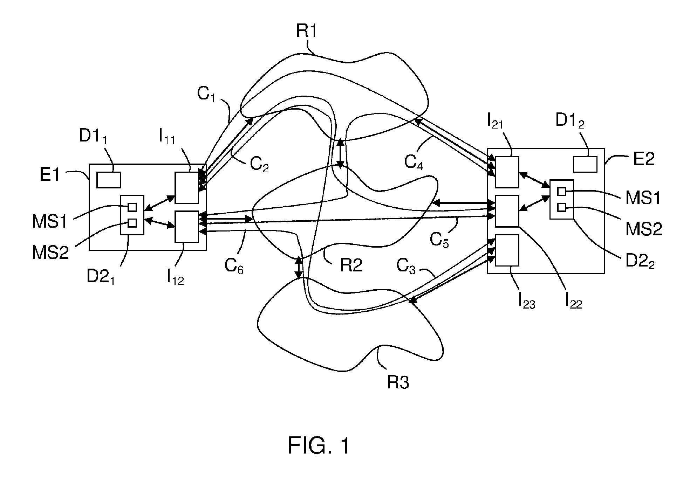

FIG. 1

Europäisches
Patentamt

European
Patent Office

Office européen
des brevets

**EUROPEAN SEARCH REPORT**

Application Number

EP 11 18 9247

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2008/310419 A1 (BANSAL DEEPAK [US] ET AL) 18 December 2008 (2008-12-18)<br>* paragraph [0006] - paragraph [0007] *<br>* paragraph [0015] - paragraph [0017] *<br>* paragraph [0015] - paragraph [0028] *<br>* paragraph [0036] - paragraph [0038] *<br>* figure 1 * | 1-14 | INV.<br>H04L12/56 |
| Y | US 2004/077341 A1 (CHANDRANMENON GIRISH P [US] ET AL) 22 April 2004 (2004-04-22)<br>* paragraph [0055] - paragraph [0057] * | 1-3,6-8, 11-14 | |
| Y | US 7 583 677 B1 (MA QINGMING [US] ET AL) 1 September 2009 (2009-09-01)<br>* column 1, line 40 - column 2, line 45 * | 1-5,9-14 | |
| Y | YLITALO J ET AL: "Dynamic network interface selection in multihomed mobile hosts",<br>SYSTEM SCIENCES, 2003. PROCEEDINGS OF THE 36TH ANNUAL HAWAII INTERNATI ONAL CONFERENCE ON 6-9 JAN. 2003, PISCATAWAY, NJ, USA,IEEE,<br>6 January 2003 (2003-01-06), pages 315-324, XP010626772,<br>ISBN: 978-0-7695-1874-9 | 2 | TECHNICAL FIELDS SEARCHED (IPC)<br><br>H04L |
| A | * the whole document * | 1,3-14 | |

The present search report has been drawn up for all claims

| Place of search | Date of completion of the search | Examiner |
|---|---|---|
| The Hague | 25 January 2012 | Clemente Lafuente, G |

## ANNEX TO THE EUROPEAN SEARCH REPORT
## ON EUROPEAN PATENT APPLICATION NO.

EP 11 18 9247

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2012

| Patent document cited in search report | | Publication date | Patent family member(s) | | Publication date |
|---|---|---|---|---|---|
| US 2008310419 | A1 | 18-12-2008 | CN | 101682549 A | 24-03-2010 |
| | | | EP | 2165465 A1 | 24-03-2010 |
| | | | US | 2008310419 A1 | 18-12-2008 |
| | | | WO | 2008157036 A1 | 24-12-2008 |
| US 2004077341 | A1 | 22-04-2004 | US | 2004077341 A1 | 22-04-2004 |
| | | | US | 2010023763 A1 | 28-01-2010 |
| US 7583677 | B1 | 01-09-2009 | US | 7583677 B1 | 01-09-2009 |
| | | | US | 8036226 B1 | 11-10-2011 |

For more details about this annex : see Official Journal of the European Patent Office, No. 12/82